# EUROPÄISCHE PATENTSCHRIFT

(11) **EP 0 514 732 B1**
(45) Veröffentlichungstag und Bekanntmachung des Hinweises auf die Patenterteilung: **17.04.1996**
(21) Anmeldenummer: 92107877.0
(22) Anmeldetag: 11.05.1992
(51) Int. Cl.: G02F 1/01, G02B 6/12

(54) **Optischer Wellenleiter**
Optical waveguide
Guide d'onde optique

(30) Priorität: 21.05.1991 DE 4116470
(43) Veröffentlichungstag der Anmeldung: 25.11.1992
(73) Patentinhaber: Alcatel SEL Aktiengesellschaft, D-70435 Stuttgart (DE); ALCATEL N.V., NL-1077 XX Amsterdam (NL)
(72) Erfinder: Kersten, Peter, Dr., W-7250 Leonberg (DE); Springer, Johann, Dr., W-7307 Aichwald (DE); Wischmann, Wiltraud, Dr., W-7016 Gerlingen (DE)
(74) Vertreter: Pohl, Herbert, Dipl.-Ing

(56) Entgegenhaltungen:
- ELECTRONICS LETTERS. Bd. 26, Nr. 6, März 1990, ENAGE GB Seiten 379 - 380 M.B. DIEMER & ALL 'PHOTOINDUCED CHANNEL WAVEGUIDE FORMATION IN NONLINEAR OPTICAL POLYMERS'
- APPLIED PHYSICS LETTERS. Bd. 58, Nr. 1, 7. Januar 1991, NEW YORK US Seiten 1-3 RAY.T.CHEN & ALL 'SINGLE-MODE POLYMER WAVEGUIDE MODULATOR''
- APPLIED PHYSICS LETTERS. Bd. 58, Nr. 11, 18. M rz 1991, NEW YORK US Seiten 1131-1133 Y.SHI 'LARGE STABLE PHOTOINDUCED REFRACTIVE INDEX ..'

## Beschreibung

Die Anmeldung betrifft einen auf einem Substrat angeordneten optischen Wellenleiter, welcher aus einer Schicht aus einem optisch nichtlinearen, Chromophore enthaltenden Polymer besteht, bei welchem diese Polymerschicht von Bufferschichten mit einem gegenüber der polymerschicht niedrigeren Brechungsindex umgeben ist.

Ein solcher optischer Wellenleiter ist bekannt (Aufsatz: "Organic polymer films for nonlinear optics" in Br. Telecom Technol. J. Vol. 6, Nop. , July 1988, Seiten 5 bis 17).

Bei dem bekannten optischen Wellenleiter bestehen die Bufferschichten aus einem Polymer mit einem niedrigeren Brechungsindex als dem Brechungsindex der Schicht aus optisch nichtlinearem Polymer, und die Bufferschichten sind mit einer aufgedampften Elektrodenschicht aus Aluminium versehen.

Die Erzeugung der Bufferschichten auf der Polymerschicht ist jedoch schwierig, weil die optisch nichtlineare Polymerschicht beim Aufbringen der Bufferschichten beschädigt werden kann. Das kann beispielsweise dadurch geschehen, daß die Polymerschicht durch das für den Buffersschichtwerkstoff erforderliche Lösungsmittel angelöst wird. Wenn die Bufferschichten aus einem organischen Werkstoff durch Aufdampfen, Sputtern oder mittels des CVD-Prozesses erzeugt werden, dann treten ggf. unzulässig hohe Temperaturen auf, die zum Erweichen oder sogar Zersetzen des Polymers führen können.

Das der Erfindung zugrunde liegende technische Problem besteht darin, einen optischen Wellenleiter der eingangs erwähnten Art in der Weise zu gestalten, daß die Bufferschichten in einfacher Weise und ohne nachteilige Beeinflussung der Polymerschicht erzeugt werden können.

Dieses technische Problem ist dadurch gelöst, daß wenigstens eine Bufferschicht aus einem Oberflächenbereich der lichtführenden Polymerschicht besteht, in welcher die Chromophore durch äußere Einwirkung ganz oder teilweise zerstört sind.

Bei einer solchen Ausgestaltung des optischen Wellenleiters wird das Licht nur im inneren Bereich der Polymerschicht geführt und der lichtführende Bereich ist von der metallischen Elektrode hinreichend isoliert. Die Bufferschichten sind auf einfache Weise ohne irgendeine nachteilige Beeinflussung der Polymerschicht herstellbar.

Vorteilhafte Ausgestaltungen der Erfindung sind in den Ansprüchen 2 und 3 enthalten.

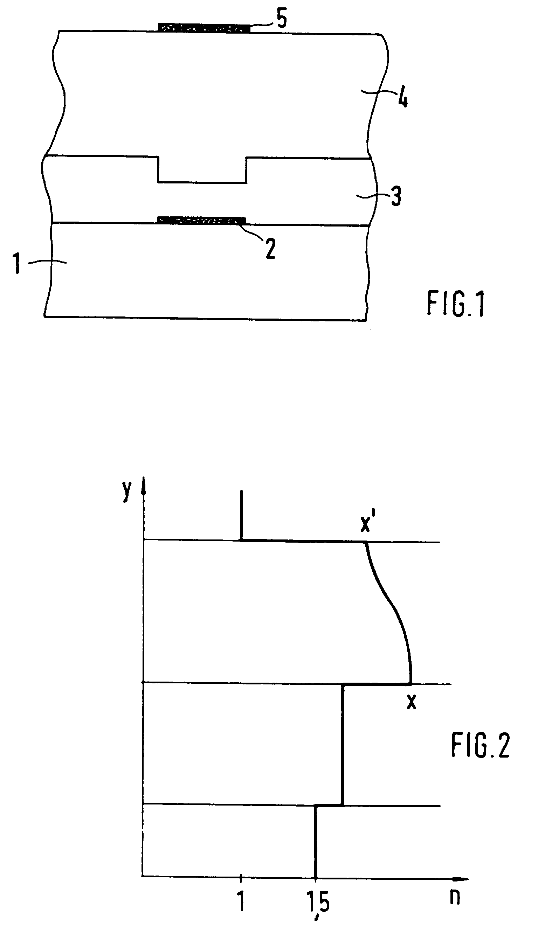

Sie ist nachstehend anhand eines in den Figuren 1 und 2 gezeigten Ausführungsbeispieles näher erläutert. Es zeigen:
- Fig. 1: den Querschnitt durch einen optischen Wellenleiter und
- Fig. 2: den Verlauf des Brechungsindex im optischen Wellenleiter gemäß Fig. 1.

In Fig. 1 ist ein optischer Wellenleiter gezeigt, bei dem nur die obere Bufferschicht durch vollständige oder teilweise Zerstörung der Chromophore in der Oberflächenschicht der Polymerschicht 4 erzeugt worden ist.

Wie aus Fig. 1 zu erkennen ist, ist der optische Wellenleiter auf einem Substrat 1 aufgebaut, welches aus Glas oder Silizium mit einer darauf befindlichen dünnen Siliziumoxydschicht bestehen kann. Auf dem Substrat 1 ist die streifenförmige Elektrode 2 angeordnet, welche beispielsweise aus einer Chrom-Gold-Schicht bestehen kann und mittels eines photolithographischen Verfahrens strukturiert worden ist. Daran schließt sich die Bufferschicht 3 an, welche entweder aus einem anorganischen Werkstoff, wie Siliziumoxyd, oder aus vernetzbaren Polymeren, beispielsweise lithographischen Negativlacken, welche nach Bestrahlung mit UV-Strahlen vernetzen, oder aus Polyimid bestehen kann. Bei der oberen Schicht handelt es sich um die lichtführende Schicht 4 aus dem optisch nichtlinearen Polymer, auf welcher die andere Elektrode 5 angeordnet ist.

Wie aus Fig. 2 zu erkennen ist, besitzt das Substrat 1 einen Brechungsindex von etwa 1,5. Der Brechungsindex der Bufferschicht 3 ist geringfügig höher. Die lichtführende Polymerschicht 4 besitzt im unteren Bereich den Brechungsindex x, welcher bis zu seiner oberen Endfläche kontinuierlich auf den Wert x' abfällt. Das ist darauf zurückzuführen, daß die Oberfläche der Polymerschicht 4 mit UV-Licht bestrahlt worden ist.

Diese Abnahme des Brechungsindex beruht auf folgenden Eigenschaften der optisch nichtlinearen Polymere:
1. Durch den Einbau von Chromophoren wird der Brechungsindex von Polymeren erhöht. Beispielsweise hat ein Polymethylmethacrylat (PMMA) einen Brechungsindex von 1,49. Durch Zugabe von Chromophoren entsteht ein optisch nichtlineares Polymer auf PMMA-Basis mit einem Brechungsindex von 1,67.
2. Die Chromophore können durch Licht im sichtbaren oder UV-Bereich zerstört werden.
3. Licht bestimmter Wellenlänge (z.B. 550 nm) wird schon innerhalb kurzer optischer Weglängen (z.B. 1 mm) bis auf wenige % absorbiert.

Das aus Fig. 2 ersichtliche Brechungsindex-Profil der optisch nichtlinearen Polymerschicht 4 ist dadurch erzielt worden, daß die Polymerschicht 4 (vor dem Aufbringen der Elektrode 5) mit einem stark absorbierten Licht (mit einer Wellenlänge von beispielsweise 550 nm) bestrahlt worden ist. Dadurch sind die Chromophore in den oberflächennahen Bereichen der Polymerschicht 4 teilweise zerstört worden, welches zu einer Verringerung des Brechungsindexes in diesem Bereich geführt hat. Der exponentielle Abfall der Intensität des Lichtes mit zunehmender Entfernung von der Oberfläche der Polymerschicht 4 ist die Ursache für den kontinuierlichen Brechzahlverlauf.

Dieser Brechzahlverlauf vermeidet Verluste, wie sie an Wellenleitern mit Polymergrenzflächen beobachtet werden und die oft mehrere dB/cm betragen. Diese Verluste treten insbesondere dann auf, wenn zwischen der Polymerschicht und der Bufferschicht größere Brechzahlunterschiede (0.1 und darüber) bestehen. Bei dem optischen Wellenleiter gemäß Fig. 1 findet man zwar auch einen Brechzahlsprung an der Grenzfläche zwischen Polymerschicht 4 und der Bufferschicht 3, jedoch bestehen zur Herstellung dieser Bufferschicht zahlreiche Möglichkeiten hinsichtlich des zu verwendenden Werkstoffes und der Herstellungsverfahren, so daß diese Grenzfläche eher zu optimieren ist. Zudem ist hier nur eine Grenzfläche vorhanden, während Wellenleiter mit einer zusätzlichen oberen Bufferschicht zwei Grenzflächen mit Brechzahlsprüngen aufweisen.

Die Erfindung ist vorstehend anhand eines aktiven optischen Wellenleiters beschrieben worden, d.h. eines Wellenleiters, dessen Brechungsindex durch ein außen angelegtes elektrisches Feld verändert werden kann. Die Erfindung kann aber auch mit Vorteil bei passiven optischen Wellenleitern verwendet werden, bei denen das im optischen Wellenleiter geführte Licht ebenfalls von der Oberfläche ferngehalten werden soll. Bei solchen Wellenleitern kommen für die lichtführende Schicht ebenfalls Chromophore enthaltende Werkstoffe in Betracht, wobei die Chromophore in diesem Fall jedoch nicht auf optisch nichtlineare Eigenschaften optimiert sein müssen.

Bei dem in Fig. 1 gezeigten Ausführungsbeispiel ist die Bufferschicht nur in der oberen Oberflächenschicht der Polymerschicht 4 erzeugt worden. Es ist aber auch möglich, die untere Bufferschicht 3 durch einen modifizierten Bereich der lichtführenden Polymerschicht 4 zu ersetzen. Wenn die Polymerschicht 4 sowohl von oben als auch von unten, beispielsweise mit UV-Licht, bestrahlt wird, kann ein annähernd symmetrisches Brechzahlprofil verwirklicht werden. Die Herstellung der unteren Bufferschicht kann durch Bestrahlen durch das transparente Substrat 1 (z.B. aus Glas) und die ggf. vorhandene transparente Elektrode 2 hindurch erfolgen.

Neben der vorstehend beschriebenen Veränderung der Brechzahl des Polymers durch Bestrahlung ist es auch möglich, diese durch eine chemische Einwirkung auf die Chromophore im Polymer zu erreichen. Als Chromophore für elektrooptische Anwendungen sind beispielsweise Derivate des Stilbens und des Azobenzols geeignet. Die Veränderung der Brechzahl bei Chromophoren auf der Basis des Stilbens ist beispielsweise durch eine Additionsreaktion an der C=C-Doppelbindung des Stilbens (Halogenaddition, katalytische Hydrierung) möglich. Dabei wird selektiv an jedes C-Atom der Doppelbindung ein Atom unter Ausbildung einer C=C-Einfachbindung addiert, z.B. ein Bromatom.

Falls als Chromophor ein Azobenzol verwendet wird, kann die Veränderung der Brechzahl durch eine reduktive Spaltung der N=N-Gruppe unter milden Bedingungen erzielt werden, z.B. mit Dithionit unter Abspaltung von Amin.

Diese reduktive Spaltung kann dadurch erfolgen, daß das mit dem Polymer beschichtete Substrat in eine wäßrige Lösung von Natriumdithionit eingetaucht wird, wobei das Natriumdithionit in die Polymerschicht hineindiffundiert. Der Brechzahlverlauf wird somit durch Diffusionsprozesse bestimmt.

## Patentansprüche

1. Auf einem Substrat (1) angeordneter optischer Wellenleiter, welcher aus einer Schicht (4) aus einem optisch nichtlinearen, Chromophore enthaltenden Polymer besteht, bei welchem diese Polymerschicht von Bufferschichten (3) mit einem gegenüber der Polymerschicht niedrigeren Brechungsindex umgeben ist,
**dadurch gekennzeichnet**, daß wenigstens eine Bufferschicht aus einem Oberflächenbereich der lichtführenden Polymerschicht (4) besteht, in welcher die Chromophore durch äußere Einwirkung ganz oder teilweise zerstört sind.

2. Optischer Wellenleiter nach Anspruch 1, dadurch gekennzeichnet, daß die Bufferschicht aus einer mit von der Polymerschicht stark absorbierbarem Licht bestrahlten Oberflächenschicht der Polymerschicht besteht.

3. Optischer Wellenleiter nach Anspruch 1, dadurch gekennzeichnet, daß die Bufferschicht aus einer durch eine chemische Reaktion mit den Chromophoren erzeugten Oberflächenschicht der Polymerschicht besteht.

## Claims

1. Optical waveguide which is disposed on a substrate (1) and which comprises a layer (4) of an optically nonlinear polymer containing chromophores, in which said polymer layer is surrounded by buffer layers (3) having a refractive index lower than that of the polymer layer, characterized in that at least one buffer layer comprises a surface region of the light-guiding polymer layer (4) in which the chromophores are completely or partially destroyed by external action.

2. Optical waveguide according to Claim 1, characterized in that the buffer layer comprises a surface layer of the polymer layer, which surface layer has been irradiated with light which can be strongly absorbed by the polymer layer.

3. Optical waveguide according to Claim 1, characterized in that the buffer layer comprises a surface layer of the polymer layer, which surface layer has been generated by a chemical reaction with the chromophores.

## Revendications

1. Guide d'ondes optique disposé sur un substrat (1), lequel guide se compose d'une couche (4) elle-même composée d'un polymère non-linéaire sur le plan optique, contenant des chromophores, dans lequel cette couche polymère est entourée de couches-tampon (3) présentant un indice de réfraction plus faible par rapport à la couche polymère, caractérisé en ce qu'au moins une couche-tampon se compose d'une zone de surface de la couche polymère (4) conductrice de lumière, dans laquelle les chromophores sont détruits totalement ou partiellement par une influence extérieure.

2. Guide d'ondes optique selon la revendication 1, caractérisé en ce que la couche-tampon se compose d'une couche de surface de la couche polymère irradiée par la lumière fortement absorbable par la couche polymère.

3. Guide d'ondes optique selon la revendication 1, caractérisé en ce que la couche-tampon se compose d'une couche de surface de la couche polymère produite par une réaction chimique avec les chromophores.
